# EUROPEAN PATENT APPLICATION

(11) **EP 3 477 341 A1**
(43) Date of publication of application: **01.05.2019**
(21) Application number: 17306504.6
(22) Date of filing: 31.10.2017
(51) Int. Cl.: G01S 17/89, G01S 7/48, G01B 11/25

(54) **METHOD FOR OBTAINING INFORMATION ABOUT DESCRIPTION OF AN OBJECT IN A 3D REAL ENVIRONMENT, CORRESPONDING COMPUTER PROGRAM PRODUCT, CARRIER MEDIUM AND DEVICE**

(71) Applicant: THOMSON LICENSING, 92130 Issy les Moulineaux (FR)
(72) Inventor: SEIFI, Mozhdeh, 35576 CESSON-SEVIGNE (FR); DRAZIC, Valter, 35576 CESSON-SEVIGNE (FR); BLONDE, Laurent, 35576 CESSON-SEVIGNE (FR)
(74) Representative: Vidon Brevets & Stratégie

(57) **Abstract**

It is proposed a method for obtaining information about description at least one object in a 3D environment, using a scanning system comprising: a light sensor comprising pixels that form a plurality of pixel observation beams in predetermined observation directions and a light source able to sequentially in time emit a plurality of emission beams in predetermined emission directions, the light source being disposed with respect to the light sensor to define a given emission-observation configuration. The method comprising the following steps:
- setting (100) a virtual representation of the 3D real environment discretised in predefined elementary volume elements, called voxels, each voxel being representative of an intersection between one of said emission beams and one of said observation beams;
- obtaining (400) a set of voxels representative of at least one piece of information about description of said at least one object, by triggering (200) the emission beams; and, for each triggered emission beam (300), by identifying whether one or several of the pixels detects or detect a change in light intensity, and for each identified pixel, by determining the voxel of the virtual representation corresponding to the intersection between the triggered emission beam and the observation beam formed by this pixel.

## Description

### 1. TECHNICAL FIELD

The present disclosure relates to the field of three-dimensional ("3D") data acquisition, for computer graphic use.

More specifically, the present disclosure relates to a method for obtaining information of description of 3D object or scene, intended to 3D reconstruction for example.

The disclosure can be of interest in any field where description of 3D objects in a real environment is of interest. This can be the case for instance in fields like virtual reality, virtual augmented reality, autonomous robotics, 3D printing, navigation, etc.

### 2. BACKGROUND

The present section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

3D computer graphics have become predominant for many modern world applications. Among the many applications for 3D computer graphics are augmented or virtual reality scene reconstruction, video and motion picture production, gesture recognition, navigation system, etc. Methods for modelling of a 3D object are emerging today as the basis for computer graphics.

Basically 3D objects are structures that are acquired and stored as digital information in computer memory. The digital information allows describing some characteristics of the 3D objects in space and reconstructing a model of this object.

Information for describing 3D objects in a real environment is therefore essential and may be obtained by a variety of technologies. Among those, a conventional method for obtaining information of description of a 3D object consists in capturing different images of the objet from multiple points of view by using one or several passive camera. This method relies on a stereo process in which 3D position information of the objects is obtained on the basis of triangulation using corresponding points of stereoscopic images and a predefined voxel space which is used to determine, by projection to images, the existence of voxels using coincidence of colours in projection regions. However, this conventional method is time-consuming in acquisition of object information and relatively complex to implement. In addition the object depth information that may be estimated on basis of binocular disparity is relatively complex to obtain and lacks of precision.

There is therefore a need for a solution for efficiently obtaining information about description of 3D object in order to estimate as accurately as possible its 3D structure.

### 3. SUMMARY OF THE DISCLOSURE

References in the specification to "one embodiment", "an embodiment", "an example embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. A particular embodiment of the invention proposes a method for obtaining information about description at least one object in a 3D environment, using a scanning system comprising:
- a light sensor comprising an array of pixels that form a plurality of pixel observation beams in predetermined observation directions; and
- at least one light source able to sequentially in time emit a plurality of emission beams in predetermined emission directions, among which a first light source is disposed with respect to said light sensor to define a first emission-observation configuration ;
   the method comprising the following steps, for said first emission-observation configuration:
   a) setting a first virtual representation of the 3D real environment discretised in predefined elementary volume elements, called voxels, each voxel being representative of an intersection between one of said emission beams and one of said observation beams;
   b) obtaining a first set of voxels representative of at least one piece of information about description of said at least one object, said obtaining step comprising:
      * triggering said plurality of emission beams; and
      * for each triggered emission beam:
         identifying whether one or several of said pixels detects or detect a change in light intensity;
         for each identified pixel, determining the voxel of said discretised virtual representation corresponding to the intersection between said triggered emission beam and the observation beam formed by said pixel.

Thus, the present method relies on a novel and inventive approach of obtaining information of description of object by determination of voxels contained in a voxel discretised virtual representation set on the basis of triangulation. By allocating a surface element of said at least one object to each voxel of said first set, the method allows estimating efficiently the structure of said least one object. This set of voxels constitutes information that allows describing the location of said at least one object in 3D space.

According to a particular feature, the emission beams of said plurality are triggered at distinct emission instants of a first pre-established emission sequence, each voxel of said set being associated with the emission instant of the triggered emission beam for which said voxel has been determined.

The emission instants constitutes time-stamp data that are representative of a second piece of information about description of said at least one object.

According to a particular feature, said step b) is iterated at least two times to obtain at least two first sets of voxels for said first emission-observation configuration. More particularly, the method comprises a step of detection whether said at least one object is fixed or mobile by analysing said at least two first sets of voxels.

The present method enables to differentiate a mobile object from a fixed object of the 3D environment.

According to a particular feature, the method comprises, for each identified pixel, a polarity data relative to the change light intensity, each voxel of said set being associated with the polarity data of the pixel for which said voxel has been determined.

The polarity data are representative of a third piece of information about description of said at least one object.

According to a particular feature, the first discretised virtual representation is set in a reference spatial coordinates system, each voxel of said first discretised virtual representation being associated with spatial coordinates representative of a spatial location of said voxel in the reference spatial coordinates system.

The location in 3D space of said at least one object can therefore be estimated relative to the reference spatial coordinates system.

According to a particular feature, an iteration of the steps a) and b) is carried out for at least one second light source, each second light source being located in a distinct location with respect to the first light source and defining with respect to said light active sensor a second emission-observation configuration, enabling to obtain a second set of voxels as a function of a second virtual representation.

The interest to have a second set of voxels with an emission-observation configuration that is different from that from which is obtain the first set of voxels is that it enables to obtain information of description said at least one object with a different point of view.

According to a particular feature, each second light source triggers said plurality of emission beams according to a distinct second pre-established emission sequence, said second pre-established emission sequence being distinct from said first pre-established emission sequence.

According to a particular feature, the method comprises the following steps carried out:
- triggering, by the first light source, a plurality of first emission beams;
- for each first emission beam, triggering, by the second light source, a plurality of second emission beams each selected as a function of the first and/or second set of voxels and said
first emission beam.

This makes it possible to increase the spatial resolution of the scanning system.

In another embodiment, the invention pertains to a computer program product comprising program code instructions for implementing the above-mentioned method (in any of its different embodiments) when said program is executed on a computer or a processor.

In another embodiment, the invention pertains to a non-transitory computer-readable carrier medium, storing a program which, when executed by a computer or a processor causes the computer or the processor to carry out the above-mentioned method (in any of its different embodiments).

In another embodiment, the invention pertains to a device adapted to obtain information about description at least one object in a 3D real environment, by means of a scanning system comprising:
- a light sensor comprising an array of pixels that form a plurality of pixel observation beams in predetermined observation directions; and
- at least one light source able to sequentially in time emit a plurality of emission beams in predetermined emission directions, among which a light source is disposed with respect to said light sensor to define an emission-observation configuration ;
- setting unit configured to set a virtual representation of the 3D real environment discretised in predefined elementary volume elements, called voxels, each voxel being representative of an intersection between one of said emission beams and one of said observation beams;
- obtaining unit configured to obtain a set of voxels representative of at least one piece of information about description of said at least one object, said obtaining unit comprising:
   * triggering unit configured to trigger said plurality of emission beams; and
   * identifying unit configured to identify, for each triggered emission beam, whether one or several of said pixels detects or detect a change in light intensity; and
   * determining unit configured to determine, for each identified pixel, the voxel of said discretised virtual representation corresponding to the intersection between said triggered emission beam and the observation beam formed by said pixel.

Advantageously, the device comprises means for implementing the steps performed in the method of obtaining as described above, in any of its various embodiments.

### 4. LIST OF FIGURES

Other features and advantages of embodiments of the invention shall appear from the following description, given by way of an indicative and non-exhaustive examples and from the appended drawings, of which:
- **Figure 1** is a flowchart of a first particular embodiment of the method according to the disclosure;
- **Figure 2** is a synoptic view that schematically illustrates the principle of determination of voxels according to the first particular embodiment of the disclosure;
- **Figure 3** is a top view of figure 2;
- **Figure 4** illustrates schematically schematic a process of determination of voxels from a discretised virtual representation based on a laser triangulation;
- **Figure 5** is an event chronogram illustrating of the operation of the method during a pre-established emission temporal sequence according to the first particular embodiment of the disclosure;
- **Figures 6** an example of a pre-established emission temporal sequence used in the first particular embodiment of the disclosure;
- **Figure 7** is a synoptic view illustrating the principle of determination of voxels according to a second particular embodiment of the disclosure;
- **Figure 8** is an example of pre-established emission temporal sequences used in the second particular embodiment of the disclosure;
- **Figure 9** is a schematic example illustrating the principle of quasi-simultaneous multi-view scan according to a particular implementation process;
- **Figure 10** is an example of pre-established emission temporal sequences used in the particular implementation process of figure 9;
- **Figure 11** shows the simplified structure of a describing device according to a particular embodiment of the disclosure.

### 5. DETAILED DESCRIPTION

In all of the figures of the present document, identical elements are designated by the same numerical reference sign.

As it will be described more fully hereafter with reference to the accompanying figures, it is proposed in one aspect of the present disclosure to obtain information of description of a 3D object using a laser scanning system. This disclosure may, however, be embodied in many alternate forms and should not be construed as limited to the embodiments set forth herein. Accordingly, while the disclosure is susceptible to various modifications and alternative forms, specific embodiments thereof are shown by way of example in the drawings and will herein be described in detail. It should be understood, however, that there is no intent to limit the disclosure to the particular forms disclosed, but on the contrary, the disclosure is to cover all modifications, equivalents, and alternatives falling within the spirit and scope of the disclosure as defined by the claims. Like numbers refer to like elements throughout the description of the figures.

It will also be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the disclosure.

While not explicitly described, the present embodiments and variants may be employed in any combination or sub-combination.

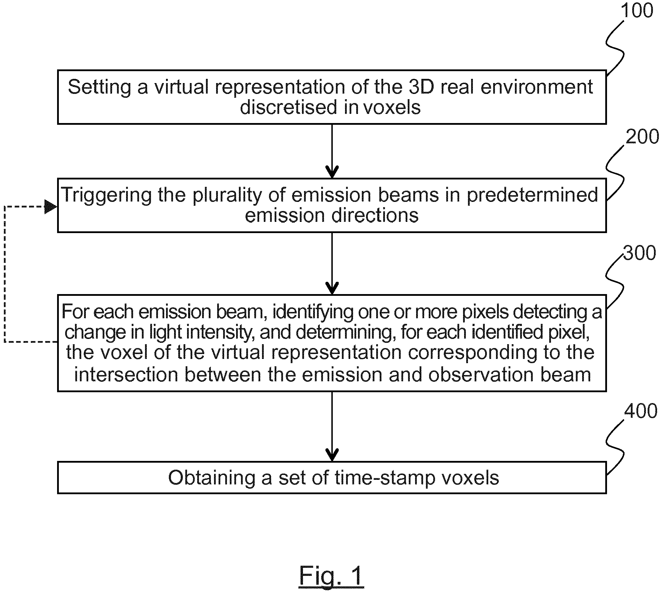

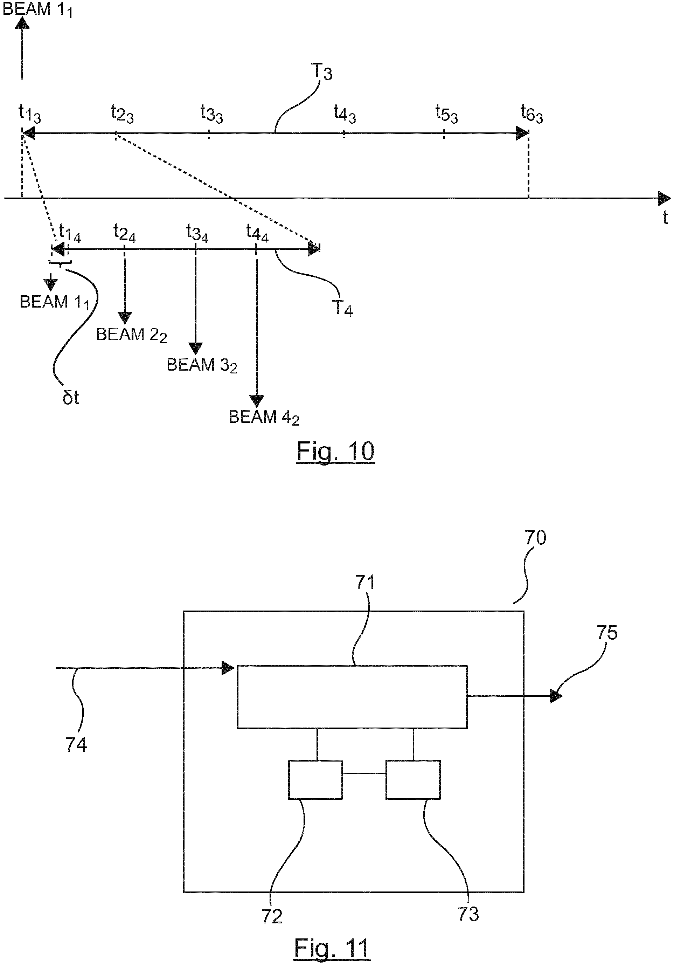

Referring now to **Figure 1****,** we present a flowchart illustrating the main steps of the method according to a first particular embodiment of the invention. This method is carried out by an obtaining device (the principle of which is described in detail below in relation with Figure 10).

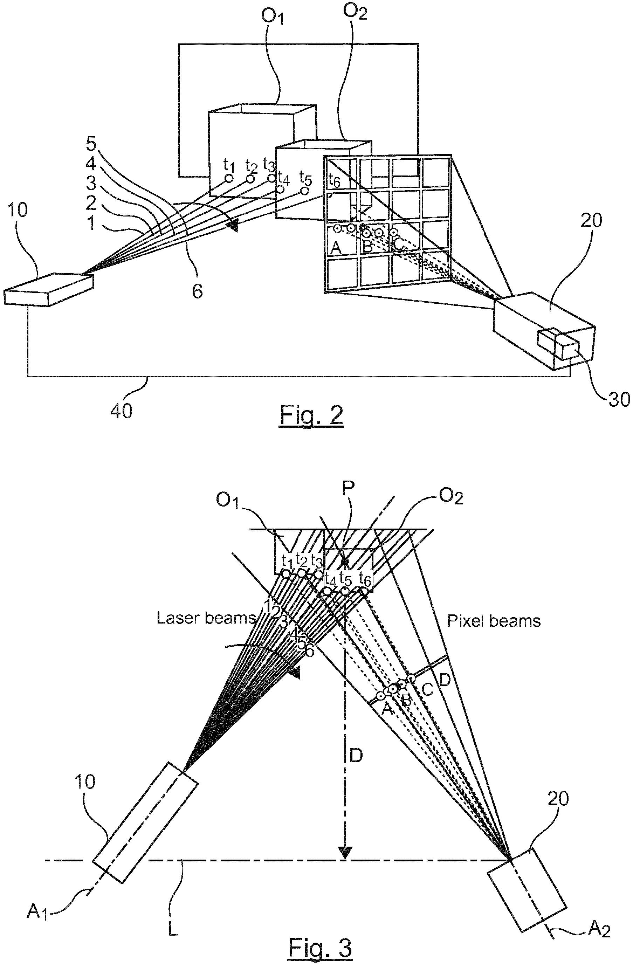

As illustrated on **Figures 2 and 3****,** we consider a laser scanning system comprising a light source 10, such as a laser scanner, and an active light sensor 20, such as an event-based vision camera. The laser source 10 is able to sequentially in time emit a plurality of emission beams in predetermined emission directions (this is sometimes referred to as directional beam scanning). The active sensor 20 is equipped with an array of pixels that form a plurality of pixel observation beams in predetermined observation directions. Basically an event-based vision sensor output a stream of events, an event being triggered when a pixel detects a change of light intensity. In the following description, an event is considered to be a set of information comprising spatial location, time-stamp and sign of the change.

In the present example, the laser source 10 is configured to emit sequentially in time the directional laser beams 1 to 6. The active sensor 20 is configured to continuously detect light according to pixel observation beams A to D. A pixel observation beam (also referred to as "pixel beam") is defined as the volume of space observed by a given pixel through the pupil of the optical system of (or associated with) the active sensor.

The laser source 10 and the active sensor 20 are positioned and oriented in relation to each other according to a predefined emission-observation configuration (or predefined scanning scheme) which depends on the location of objects to be observed. More specifically the laser source 10 and the active sensor 20 are arranged here in a manner that the A1 and A2 optical axes respectively of the laser source 10 and the active sensor 20 intersect in a region of observed space where are located the objects O1 and O2 to be observed. The centre of this region is represented on Figure 3 by the point P, which the point of intersection of the optical axes A1 and A2 of laser source 10 and active sensor 20 respectively. The point of intersection P is previously fixed as a function of a pre-established known distance D (for example 3 meters if the scanning system is used indoors), this distance D separating the base line L joining the laser source 10 and the active sensor 20 from the intersection point P. Alternatively, the point of intersection P can be determined in real time using an object tracking process known by the skilled person.

This predefined emission-observation configuration is supposed to be fixed in the following discussion.

For the purposes of simplifying the description, the figures 1-4 exhibit, source side, a one-dimensional laser scanning with only six emission beams and, sensor side, only four observation beams. The number of emission beams and pixel beams represented is deliberately limited purely for the purposes of pedagogical description, and so as not to burden the figures and the associated description.

It is considered in the present embodiment that the obtaining device 30 is integrated within the active sensor 20. It should be noted that, according to alternative embodiments, the describing device can be integrated in the laser source 10 or can be a unit independent from the laser source 10 and the active sensor 20.

The method described below is initialized by the device 30 which remotely drives the source 10 by means of commands transmitted via wire or wireless communication means 40.

In step 100, the device 30 sets a space of virtual representation of the real environment, which is discretised in predefined elementary volume elements, hereafter called "voxels". Each voxel is polygonal-shaped and representative of an intersection between one of emission beams 1-6 and one of observation beams A-D. This step leads to the formation of 3D grid of voxels. As explained below, some of these voxels will form the base data used to describe the 3D objects O1 and O2 present in the 3D environment.

The grid of voxels is set in a reference spatial coordinates system (associated for example with the active sensor 20) and each voxel of the grid is associated with spatial coordinates representative of the spatial location of this voxel in the reference coordinates system.

Once the grid of voxels set, the device 30 executes step 200.

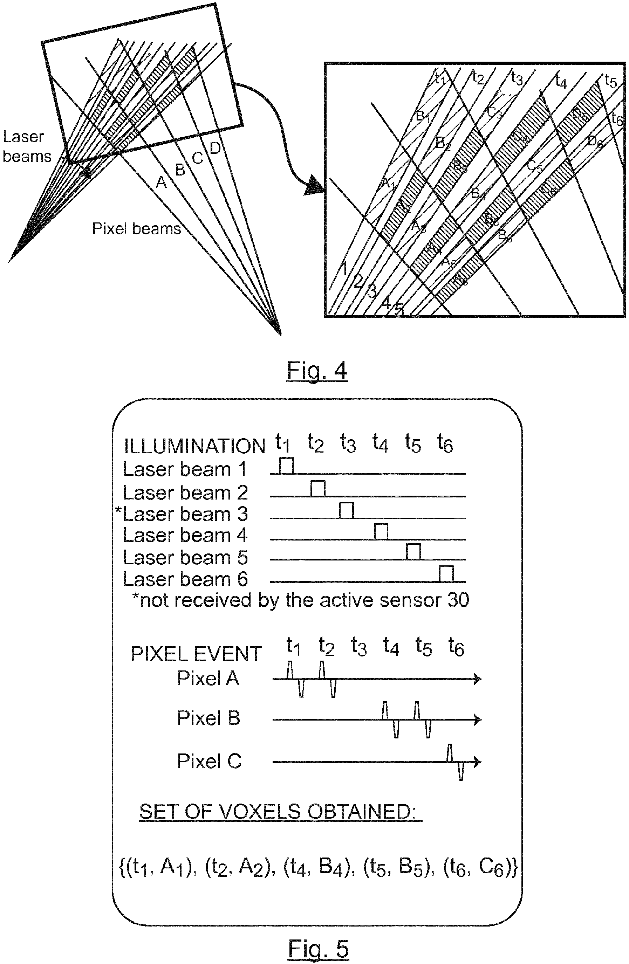

As shown in the example of **figure 4****,** the grid of voxels here comprises:
- the voxels A1 to A6 are defined as resulting from the intersection between the emission beams 1 to 6 and the observation beam A;
- the voxels B1 to B6 corresponds to the intersection between the emission beams 1 to 6 and the observation beam B;
- the voxels C3 to C6 corresponds to the intersection between the emission beams 3 to 6 and the observation beam C;
- the voxels D5 and C6 corresponds to the intersection between the emission beams 5 to 6 and the observation beam D.

It should be noted that the number and shape of voxels contained in the grid is not limited to the example illustrated here. The number and shape of voxels defined in the grid especially depends, on the one hand, on the shape and dimensions of laser beams emitted by the laser source and, on the other hand, the number and arrangement of pixels comprised in the active sensor. For example, for a given scanning scheme, a greater number of laser beams and a greater number of pixels (and so a greater number of pixel beam) allows having a voxel grid with a finer mesh and thereby obtaining more information to describe the 3D objects.

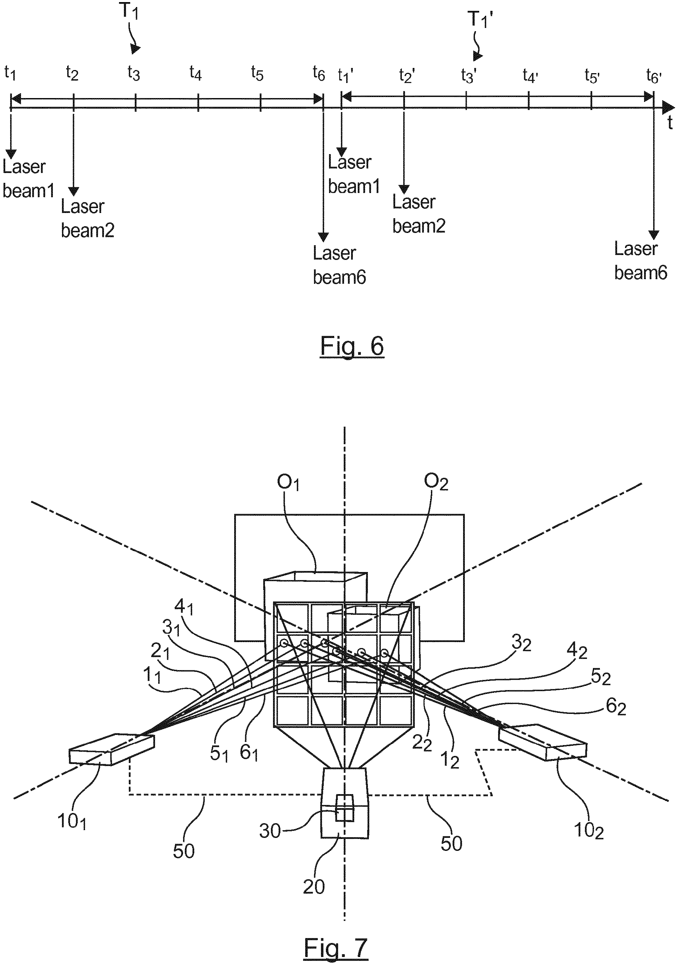

In step 200, the device 30 transmits an emission command to the laser source 10 to trigger the laser scan. Upon reception of the emission command, the laser source 10 emits the plurality of laser beams 1 to 6 sequentially in time according to a pre-established emission temporal sequence T1. The temporal sequence T1 comprises a set of time slot each reserved to emit a laser beam according to a given direction. As illustrated in **figure 6****,** the temporal sequence T1 more specifically comprises successive time slots reserved to emit sequentially the laser beams 1 to 6: the time instants *t1* to *t6* represent the instants of emission of the laser beams 1 to 6 respectively. This constitutes the scanning pattern of the system which is known by the device 30 and which defines the relation between emission instants and the associated directions of laser beam in space.

At the same time, the device 30 transmits an activation command to active the active sensor 20.

In step 300, for each emission beam i emitted at the instant *ti* (with 1 ≤ *i* ≤ 6), the device 30 identifies whether one or more of pixels of the sensor 20 detects or detect a change in light intensity (also called "pixel event"). Then, the devices 30 determines, for each identified pixel, the voxel (Vᵢ) of the grid of voxels set at previous step 100 that corresponds to the intersection between the emission beam emitted at the instant *ti* and the observation beam associated with the identified pixel.

As shown in **figure 5****,** the set of voxels obtained by the device 30 at the end of step 200 is [A1; A2; B4; B5; C6]. Each of these voxels is associated with spatial coordinates representative of its spatial location in the reference coordinates system.

The set of voxels determined by the device 30 is thus representative a first piece of information of description of the objects observed in 3D environment. By 'information of description' it is meant here information of location of objects in 3D space.

It should be noted that, for a given emission beam, if no pixel event occurs, in other words if no change in light intensity has been detected by the active sensor (like this is the case for the laser beam 3 emitted at instant *t3*), the devices considers that no voxel is to be integrated into the voxel set. Indeed, as we can see in the example of Figures 2-3, due to the particular locations of O1 and O2 with respect to the scanning system, laser beam 3 diffused or reflected by the object O1 is stopped by the object O2. The presence of such occlusion for that particular emission session, the active sensor detects no pixel event.

Let's take the example of determination of the voxel A1. As the laser beam 1 emitted by the source 10 is detected by the pixel corresponding to the observation beam A, this means that the laser beam has been diffused or reflected by a surface element of the object O towards the active sensor 30 before achieving that pixel. The device 30 therefore considers that, by laser triangulation, a surface element of one of observed objects is present in the voxel A1 (i.e. in the region of space represented by this voxel A1). Thus the device 30 can allocate, for each voxel of the voxel set, a surface element of observed object, each surface element being associated with the spatial coordinates of said voxel.

In addition, as every emission beam is subject to a time-stamp procedure (each emission beam is emitted at the instant *ti* of the emission sequence T1 (with 1 ≤ *i* ≤ 6), the device 30 associates each voxel of the set with the emission instant *tᵢ* of the emission beam for which this voxel has been determined. These emission instants form for the device 30 time-stamp data representative of a second piece of information about description of the objects observed in 3D environment. By 'information of description' it is meant here information of time-stamp of the objects observed.

Thus the device 30 generates at the end of step 200 a set of time-stamp voxels that can be represented as follows: [(t1, A1); (t2, A2); (t4, B4); (t5, B5); (t6,C6)].

The device 30 can also associates each voxel of the voxel set with data regarding the polarity of the change light intensity occurred for the concerned pixels, such as data about a positive or negative transition of the light intensity, as illustrated in figure 5. The polarity data are representative of a third piece information about description of the objects observed in 3D environment. By 'information of description' it is meant here information of polarity of light intensity associated of the objects observed.

According to advantageous feature of the disclosure, the device 30 performs to several iterations of the steps 200 and 300 described above, in order to obtain more information of description. This allows producing a plurality of time-stamp voxel sets while maintaining the same emission-observation configuration. For example, the steps 200 and 300 are iterated two times as illustrated on **Figure 6****:** the plurality of emission beams 1-6 is triggered at distinct emission instants *t1* to *t6* of a first pre-established emission sequence T1 to obtain a first set of time-stamp voxels and the same plurality of emission beams 1-6 is again triggered at distinct emission instants *t1'* to *t6'* of a second pre-established emission sequence T1' to obtain a second set of time-stamp voxels. The first and second temporal sequences are temporally disjoined. The device 30 can then perform an analysis of the first and second f time-stamp voxel sets obtained, in order to detect, for example, the presence of fixed or mobile objects in the 3D environment. Identical voxel sets suppose that the object observed is fixed, whereas non-identical voxel sets suppose that the object observed is mobile or dynamic. For example, it is possible to allocate a probability of presence of mobile objects in 3D environment to some voxels as a function of the time-stamp voxel sets obtained.

We refer now to **Figure 7** that shows a second embodiment of the disclosure in which is implemented an asynchronous multi-view laser scan. Contrary to the first embodiment in which the scanning system comprises only one laser source to perform a single-view laser scan, the scanning system here comprises two laser sources to perform a double-view laser scan: a first laser source 10₁ and a second laser source 10₂ each located in a distinct location with respect to the active sensor 20. The first laser source 10₁ is positioned and oriented with respect the active sensor 20 to define a first emission-observation configuration (or first scan scheme) and the second laser source 10₂ is positioned and oriented with respect to the active sensor 20 to define a second emission-observation configuration (or second scan scheme).

The device 30 remotely drives each of the laser source 10₁ and 10₂ by means of commands transmitted via wire or wireless communication means 50.

The laser source 10₁ is able to sequentially in time emit a plurality of laser beams 1₁-6₁ in predetermined emission directions. The laser beams 1₁-6₁ are emitted according to the pre-established emission temporal sequence T1 (as described in detail below in relation with figure 6). The laser source 10₂ is able to sequentially in time emit a plurality of laser beams 1₂-6₂. The laser beams 1₂-6₂ are emitted according to the pre-established emission temporal sequence T2.

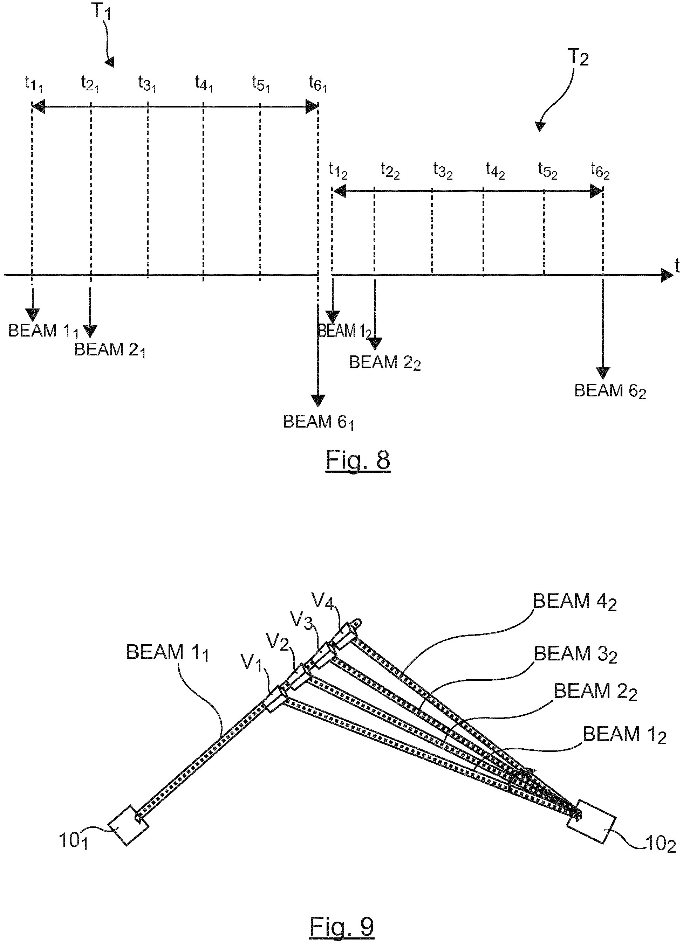

The steps 100 to 300 described above are first carried out for the first laser source 10₁ to set a first grid of voxels as a function of the first emission-observation configuration and obtain a first voxel set of description of objects, in accordance with the principle described above in relation with Figure 1. To that end, the device 30 transmits an emission command to the first laser source 10₁ to trigger the associated laser scan. As shown in **Figure 8****,** the temporal sequence T1 comprises successive instants *t1₁* to *t6₁* reserved to the emission of the laser beams 1 to 6 respectively.

Then, the steps 100 to 300 described above are carried out for the second laser source 10₂ to set a second grid of voxels as a function of the first emission-observation configuration and obtain a second voxel set of description of objects, in accordance with the principle describe above in relation with Figure 1. In other words, the steps 100 to 300 are re-iterated but for the second emission-observation configuration. To that end, the device 30 transmits an emission command to the first laser source 10₂ to trigger the associated laser scan. As shown in Figure 8, the temporal sequence T2 comprises successive instants *t1₂* to *t6₂* reserved to the emission of the laser beams 7 to 12 respectively. The temporal sequence T2 is temporally disjoined from the temporal sequence T1.

The interest to have a second set of voxels with a emission-observation configuration that is different from that from which is obtain the first set of voxels is that it enables to obtain information of description of objects with a different point of view of scan. The information of description resulting from such multiple scanning configurations is therefore more accurate.

**Figure 9** is a schematic example of quasi-simultaneous multi-view laser scan. This particular laser scan is carried out after that the device 30 had obtained the first voxel set and/or second voxel set discussed above.

The device 30 transmits a first emission command to the first laser source 10₁ to trigger a first-type multi-directional laser scan (hereafter referred to as "slow scan"), and a second emission command to the second laser source 10₂ to trigger, to each laser beam emitted by the first laser source 10₁, a second-type multi-directional laser scan (hereafter referred to as "fast scan").

Upon reception of the first emission command, the first laser source 10₁ emits a plurality of laser beams 1₁ to 6₁ sequentially in time according to a first emission temporal sequence T3. As shown in **Figure 10****,** the temporal sequence T3 comprises successive instants *t1₁* to *t6₁* reserved to the emission of the laser beams 1₁ to 6₁ respectively.

Upon reception of the second emission command, the second laser source 10₂ emits, for each laser beam emitted by the first laser source 10₁, at least one laser beams according to a second emission temporal sequence T4 which depends on the voxels set obtained previously and said laser beam emitted by the first laser source 10₁. For example, the temporal sequence T4 shown in figure 9 is reserved to the second laser source 10₂ to emit the laser beams 1₁ to 6₁ during the time slot reserved to the first laser source 10₁ for the emission of the laser beam 1₁.

More precisely, the first laser source 10₁ emits the laser beams 1₁ at instant *t1₃*, then the second laser source 10₂ quasi-simultaneously triggers the emission of the laser beams 1₂ to 4₂ at instants *t1₄* to *t4₄* respectively. By 'quasi-simultaneously' is meant a temporal difference δt between the instant of emission *t1₃* (of the source 10₁) and the instant of emission *t1₄* (of the source 10₂) as short as possible but remaining differentiable by the active sensor 20 (δt can be defined as a function of the temporal sensibility of the active sensor used).

It is important to note that the laser beams 1₂ to 4₂ emitted by the second laser source 10₂ during its emission sequence T4 are previously selected by the device 30 as a function of voxels set obtained previously and the laser beam 1₁ emitted by the first laser source 10₁. The particular process here does not imply an exhaustive laser scan like before (for example laser scan comprising the plurality of laser beams 1₂to 6₂), but relies on, for the second laser source 10₂, a laser scan specifically selected as a function of the voxels corresponding to the intersection between the voxels set previously obtained and the laser beam 1₁ emitted by the laser source 10₁. As the device 30 knows, from the first scan scheme and the voxel set previously obtained, that the laser beam 1₁ intersects voxels V1 to V4 of the voxel set, it therefore able to deduce, from the second scan scheme, that the laser beams to be emitted by the second laser source 10₂ are those intersect the voxels V1 to V4, i.e. the laser beams 1₂ to 4₂. The effect of such a quasi-simultaneous double laser scan is to increase the spatial resolution of the scanning system and to make it possible more easily for the emergence of occlusions in 3D environment.

**Figure 11** shows the simplified structure of an obtaining device (or a machine) according to a particular embodiment of the invention, which carries out the method shown in Figure 1 for example. This device is comprised for example in the active sensor (e.g. the event-based vision camera 20).

The device 70 comprises a non-volatile memory 71 (e.g. a read-only memory (ROM) or a hard disk), a volatile memory 73 (e.g. a random access memory or RAM) and a processor 72. The non-volatile memory 71 is a non-transitory computer-readable carrier medium. It stores executable program code instructions, which are executed by the processor 72 in order to enable implementation of the obtaining method described above in relation with Figure 1.

Upon initialization, the aforementioned program code instructions are transferred from the non-volatile memory 71 to the volatile memory 73 so as to be executed by the processor 72. The volatile memory 43 likewise includes registers for storing the variables and parameters required for this execution.

The device 70 receives as inputs 74 the emission-observation configuration of the scanning system. The device 70 generates as outputs, for the pre-established emission-observation configuration, information about description of object, e.g. in the form of an event stream 75 comprising a set of voxels, time-stamp and polarity data, as described above.

As will be appreciated by one skilled in the art, aspects of the present principles can be embodied as a system, method or computer readable medium. Accordingly, aspects of the present principles can take the form of an entirely hardware embodiment, an entirely software embodiment (including firmware, resident software, micro-code, and so forth), or an embodiment combining software and hardware aspects that can all generally be referred to herein as a "circuit", "module", or "system".

When the present principles are implemented by one or several hardware components, it can be noted that an hardware component comprises a processor that is an integrated circuit such as a central processing unit, and/or a microprocessor, and/or an Application-specific integrated circuit (ASIC), and/or an Application-specific instruction-set processor (ASIP), and/or a graphics processing unit (GPU), and/or a physics processing unit (PPU), and/or a digital signal processor (DSP), and/or an image processor, and/or a coprocessor, and/or a floating-point unit, and/or a network processor, and/or an audio processor, and/or a multi-core processor. Moreover, the hardware component can also comprise a baseband processor (comprising for example memory units, and a firmware) and/or radio electronic circuits (that can comprise antennas) which receive or transmit radio signals. In one embodiment, the hardware component is compliant with one or more standards such as ISO/IEC 18092 / ECMA-340, ISO/IEC 21481 / ECMA-352, GSMA, StoLPaN, ETSI/SCP (Smart Card Platform), GlobalPlatform (i.e. a secure element). In a variant, the hardware component is a Radio-frequency identification (RFID) tag. In one embodiment, a hardware component comprises circuits that enable Bluetooth communications, and/or Wi-fi communications, and/or Zigbee communications, and/or USB communications and/or Firewire communications and/or NFC (for Near Field) communications.

Furthermore, aspects of the present principles can take the form of a computer readable storage medium. Any combination of one or more computer readable storage medium(s) may be utilized.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

Thus for example, it will be appreciated by those skilled in the art that the block diagrams presented herein represent conceptual views of illustrative system components and/or circuitry embodying the principles of the disclosure. Similarly, it will be appreciated that any flow charts, flow diagrams, state transition diagrams, pseudo code, and the like represent various processes which may be substantially represented in computer readable storage media and so executed by a computer or a processor, whether or not such computer or processor is explicitly shown.

Although the present disclosure has been described with reference to one or more examples, workers skilled in the art will recognize that changes may be made in form and detail without departing from the scope of the disclosure and/or the appended claims.

## Claims

1. Method for obtaining information about description at least one object in a 3D environment, using a scanning system comprising:
- a light sensor comprising an array of pixels that form a plurality of pixel observation beams (A-D) in predetermined observation directions;
- at least one light source (10) able to sequentially in time emit a plurality of emission beams (1-6) in predetermined emission directions, among which a first light source (10) is disposed with respect to said light sensor to define a first emission-observation configuration ;
the method comprising the following steps, for said first emission-observation configuration:
a) setting (100) a first virtual representation of the 3D real environment discretised in predefined elementary volume elements, called voxels, each voxel being representative of an intersection between one of said emission beams and one of said observation beams;
b) obtaining (400) a first set of voxels representative of at least one piece of information about description of said at least one object, said obtaining step comprising:
* triggering said plurality of emission beams; and
* for each triggered emission beam:
identifying whether one or several of said pixels detects or detect a change in light intensity;
for each identified pixel, determining the voxel (Vᵢ) of said discretised virtual representation corresponding to the intersection between said triggered emission beam and the observation beam formed by said pixel.

2. Method according to claim 1, wherein the emission beams of said plurality are triggered at distinct emission instants (*tᵢ*) of a first pre-established emission sequence (T1), each voxel of said set being associated with the emission instant (*tᵢ*) of the triggered emission beam for which said voxel has been determined.

3. Method according to any one of claims 1 and 2, wherein said step b) is iterated at least two times to obtain at least two first sets of voxels for said first emission-observation configuration.

4. Method according to claim 3, comprising a step of detection whether said at least one object is fixed or mobile by analysing said at least two first sets of voxels.

5. Method according to any one of claims 1 to 4, comprising, for each identified pixel, a polarity data relative to the change light intensity, each voxel of said set being associated with the polarity data of the pixel for which said voxel has been determined.

6. Method according to any one of claims 1 to 5, wherein the first discretised virtual representation is set in a reference spatial coordinates system, each voxel of said first discretised virtual representation being associated with spatial coordinates representative of a spatial location of said voxel in the reference spatial coordinates system.

7. Method according to any one of claims 1 to 6, wherein an iteration of the steps a) and b) is carried out for at least one second light source (10₂), each second light source being located in a distinct location with respect to the first light source (10₁) and defining with respect to said light active sensor a second emission-observation configuration, enabling to obtain a second set of voxels as a function of a second virtual representation.

8. Method according to claim 5, wherein each second light source triggers said plurality of emission beams according to a distinct second pre-established emission sequence (T2), said second pre-established emission sequence being distinct from said first pre-established emission sequence.

9. Method according to any one of claims 7 and 8, comprising the following steps carried out:
- triggering, by the first light source, a plurality of first emission beams;
- for each first emission beam, triggering, by the second light source, a plurality of second emission beams each selected as a function of the first and/or second set of voxels and said
first emission beam.

10. Computer program product, **characterized in that** it comprises program code instructions for implementing the method according to at least one of the claims 1 to 9, when said program is executed on a computer or a processor.

11. Non-transitory computer-readable carrier medium storing a computer program product according to claim 10.

12. Device adapted to obtain information about description at least one object in a 3D real environment by means of a scanning system comprising:
- a light sensor comprising an array of pixels that form a plurality of pixel observation beams (A-D) in predetermined observation directions; and
- at least one light source able to sequentially in time emit a plurality of emission beams (1-6) in predetermined emission directions, among which a light source (10) is disposed with respect to said light sensor to define an emission-observation configuration ;
- setting unit configured to set a virtual representation of the 3D real environment discretised in predefined elementary volume elements, called voxels, each voxel being representative of an intersection between one of said emission beams and one of said observation beams;
- obtaining unit configured to obtain a set of voxels representative of at least one piece of information about description of said at least one object, said obtaining unit comprising:
* triggering unit configured to trigger said plurality of emission beams; and
* identifying unit configured to identify, for each triggered emission beam, whether one or several of said pixels detects or detect a change in light intensity; and
* determining unit configured to determine, for each identified pixel, the voxel (Vi) of said discretised virtual representation corresponding to the intersection between said triggered emission beam and the observation beam formed by said pixel.
